# FASCICULE DE BREVET EUROPEEN

(11) **EP 1 675 901 B1**
(45) Date de publication et mention de la délivrance du brevet: **25.08.2010**
(21) Numéro de dépôt: 04817289.4
(22) Date de dépôt: 19.10.2004
(51) Int. Cl.: C08K 13/02, C08K 5/17, C08K 5/098, C08K 3/22

(54) **COMPOSITION STABILISEE VIS-A-VIS DE LA LUMIERE ET/OU DE LA CHALEUR**
LICHT- UND/ODER WÄRMESTABILISIERTE ZUSAMMENSETZUNG
LIGHT- AND/OR HEAT-STABILIZED COMPOSITION

(30) Priorité: 20.10.2003 FR 0312242
(43) Date de publication de la demande: 05.07.2006
(73) Titulaire: Rhodianyl, 92512 Boulogne-Billancourt Cédex (FR)
(72) Inventeur: BOSSENNEC, Véronique, F-69360 Serezin Du Rhône (FR); CHARBONNEAUX, Thierry, 69006 Lyon (FR)
(74) Mandataire: Esson, Jean-Pierre
(86) Numéro de dépôt international: PCT/FR2004/002664
(87) Numéro de publication internationale: WO 2005/040262

(56) Documents cités:
- WO-A-02/053633
- FR-A- 1 383 759
- US-A- 6 063 843

## Description

La présente invention concerne une composition à base de polyamide stabilisée vis à vis de la lumière et/ou de la chaleur, comprenant au moins un stabilisant présentant au moins une fonction amine encombrée, du dioxyde de titane et un composé du manganèse. L'invention concerne aussi des fils, fibres, filaments et/ou articles obtenus à partir de cette composition.

Le polyamide est un polymère synthétique largement utilisé pour la fabrication de fils, fibres et filaments. Ces fibres, fils et filaments sont ensuite utilisés pour la réalisation de surfaces textiles, et en particulier de surfaces textiles teintes.

Le polyamide peut subir des dégradations lorsqu'il est soumis à des éléments ou conditions externes tels que les rayons UV, la chaleur et les intempéries. Des dégradations peuvent également être induites par la chaleur utilisée au cours de sa fabrication et/ou de sa mise en forme. Cette instabilité se traduit par des dégradations, des pertes de propriétés mécaniques, des changements de couleur et des inhomogénéités. Ces problèmes peuvent devenir critiques pour un certain nombre d'applications.

Pour améliorer la stabilité des polyamides, il est connu de leur associer des additifs. Ils sont souvent classés par leur mode d'action: anti-oxydant, anti-UV, absorbeurs d'UV... Pour stabiliser le polyamide, on connaît notamment les antioxydants présentant des motifs phénols encombrés, et les stabilisants phosphorés.

Les documents WO02053633 et US 6063843 décrivent des compositions stabilisées à base de polyamide comprenant des agents stabilisants ayant une fonction amine encombrée.

Le document FR1383759 décrit des compositions stabilisées à la lumière comprenant du polyamide, du dioxyde de titane et un composé du manganèse. On recherche constamment de nouveaux additifs ou de nouvelles combinaisons d'additifs stabilisants pour le polyamide afin d'augmenter les propriétés de stabilité vis à vis de la lumière et de la chaleur.

La présente invention concerne une composition à base de matrice polyamide comprenant au moins un stabilisant vis à vis de la lumière et/ou de la chaleur comprenant au moins une fonction amine encombrée, du dioxyde de titane et un composé du manganèse.

Les compositions selon l'invention présentent une bonne stabilité vis à vis de la lumière et/ou de la chaleur. La tenue thermique et/ou lumière de la composition polyamide stabilisée de l'invention permet notamment une meilleure uniformité de la teinture, le maintient des propriétés mécaniques, et une meilleure tenue de la teinture au cours du temps (vieillissement). On observe particulièrement que les propriétés physiques et chimiques de la composition polyamide stabilisée selon l'invention ne sont pas dégradées après un traitement thermique, tel qu'un traitement de thermofixage que subissent les fils, fibres, filaments et ou articles, avant ou après les cycles de teinture.

Les différents composés peuvent être ajoutés à la synthèse du polyamide. Un tel procédé permet entre autres d'obtenir une très bonne dispersion des additifs dans le polyamide et d'éviter parfois des opérations de refusion dudit polyamide. De plus, l'introduction des stabilisants à la synthèse permet d'éviter des dégradations au cours de la fabrication du polyamide et/ou de sa mise en forme.

De plus, les compositions selon l'invention permettent d'obtenir des articles textiles dont la tenue tinctoriale est excellente. On observe par ailleurs peu ou pas de défaut visuel dues à une mauvaise uniformité de teinture sur les articles obtenus. Cet avantage avec les compositions de l'invention est particulièrement obtenu lorsqu'une étape de thermofixation a été faite sur des articles textiles non désensimé.

Il existe de nombreux stabilisants comprenant au moins une fonction amine encombrée connus de l'homme du métier. Le stabilisant selon l'invention comprenant au moins une fonction amine encombrée est de préférence choisi dans le groupe comprenant : la 4-amino-2,2,6,6-tétramethylpipéridine (TAD), la 4-carboxy-2,2,6,6-tétramethylpipéridine, les composés aromatiques de formule (I) : 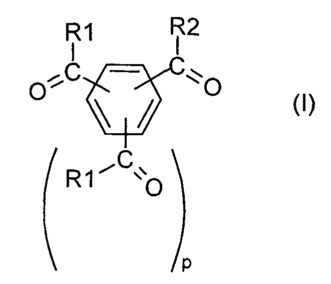 dans laquelle p est égal à 0 ou 1, et R1 et R2 sont des groupements hydrocarbonés, éventuellement cyclique, aliphatique et/ou aromatique, substitué ou non, insaturé ou non, comprenant préférentiellement de 5 à 20 atomes de carbone, identiques ou différents, dont l'un au moins présente une fonction amine encombrée. Les groupements R1 et/ou R2 peuvent comprendre outre la fonction amine des hétéroatomes, tels que de l'azote et/ou de l'oxygène.

Les composés de formule (I) comprennent ainsi deux ou trois fonctions carbonyles et comprenant au moins un groupement présentant une fonction amine encombrée, ladite fonction étant compris dans un groupement lié à une des fonctions carbonyles. La fonction carbonyle peut être comprise dans un groupement amide, ester ou ester-amide.

Si p est égal à 0, l'additif peut avoir une structure chimique (II) ou (III), définies comme suit : 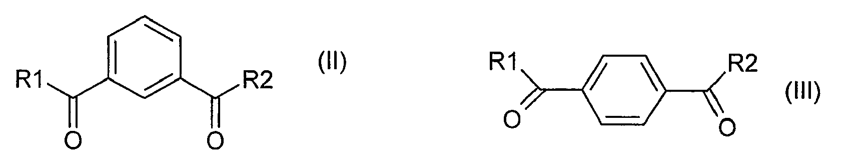 dans laquelle R1 ou R2 sont des groupements identiques ou différents dont au moins un présente une fonction amine encombrée, un groupement ne comprenant pas de fonction amine stériquement encombrée pouvant être choisi parmi les alcoxy de C₁ à C₁₈; les aminoalkyles éventuellement substitués par l'hydrogène, les alcoxy de C₁ à C₅, les groupes carbonyles, les groupes carbamyles ou les groupes alcoxycarbonyles; les epoxydes en C₃ à C₅.

Le ou les groupements comprenant une fonction amine stériquement encombrée pouvant être choisi(s) parmi les composés de formule (IV) suivants : 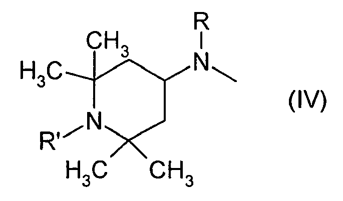 dans laquelle R et R' sont indépendamment choisis parmi l'hydrogène, les alkyles de C₁ à C₁₂, les alcoxy de C₁ à C₈, les groupements de structure -COR3, où R3 est choisi parmi l'hydrogène, les alkyles de C₁ à C₆; le phényle; le groupement - COO(alkyle de C₁ à C₄); le groupement de structure NR5R6, où R5 et R6 sont choisis indépendamment parmi l'hydrogène, les alkyles de C₁ à C₁₂, les cycloalkyles en C₅ ou C₆, le phényle, les alkylphényles dont l'alkyle est de C₁ à C₁₂, où R5 et R6 forment avec l'atome d'azote auquel ils sont liés un cycle de 5 à 7 atomes, comprenant éventuellement un atome d'oxygène ou un autre atome d'azote, formant de préférence un groupe de la famille des pipéridines ou des morpholines.

Un composé préféré pour le stabilisant à la lumière est le composé de formule (V) : 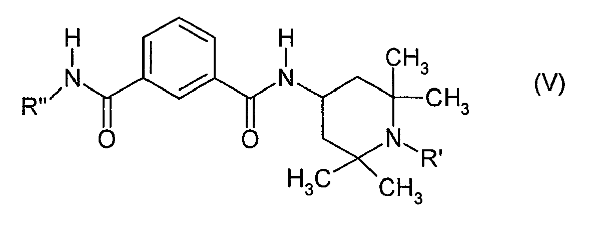 dans laquelle R" est choisi parmi les alkyles de C₁ à C₂₀, les aminoalkyles de C₁ à C₂₀, les aminoalkyles substitués de C₁ à C₂₀, les hydroxyalkyles de C₁ à C₂₀, les alcènes de C₁ à C₂₀, les alcènes substitués de C₁ à C₂₀, les groupements alcoxyalkyles, les groupements C₁₋₂₀-oxy-N-C₁₋₂₀-alkyles, les groupements -N-cycloalkyles de C₁ à C₁₀, les groupements -N-cycloalkyles de C₁ à C₁₀ substitués par un groupement -COR4 où R4 est choisi parmi l'hydrogène, les alkyles de C₁ à C₆, le phényle, les groupements C₁₋₂₀COO(H ou C₁₋₄alkyle), et où R' a la même signification que pour la formule (IV).

Le stabilisant à la lumière est plus préférablement encore le composé de formule (VI) :

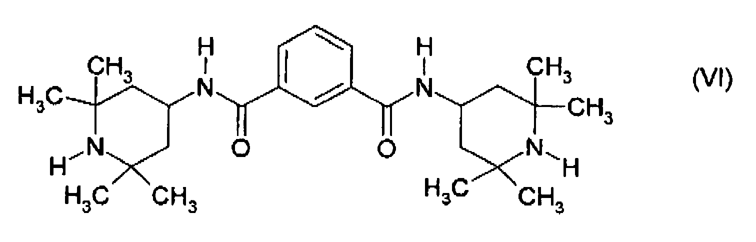

Cet additif est par exemple fourni par la société Clariant sous la dénomination Nylostab S-EED^{®}.

La composition de l'invention peut comprendre de 0,05 % à 0,5 % en poids de stabilisant vis à vis de la lumière et/ou de la chaleur comprenant au moins une fonction amine encombrée, par rapport au poids total de la composition, préférentiellement de 0,1 à 0,3 % en poids.

La composition selon l'invention comprendr-s du dioxyde de titane.

Le dioxyde de titane peut être une particule de dioxyde de titane, éventuellement sous forme cristalline. Le dioxyde de titane cristallin peut être de type anatase et/ou rutile. Préférentiellement, la nature cristalline du dioxyde de titane est majoritairement anatase, ce qui signifie que le taux d'anatase du composé du titane est supérieur à 50 % en poids, préférentiellement 80 % en poids.

La composition selon l'invention peut comprendre de 0,01% à 3% en poids, préférentiellement de 0,02 à 2 % en poids, plus préférentiellement de 0,3 à 2 % en poids, de dioxyde de titane par rapport au poids total de la composition. Les particules de dioxyde de titane peuvent présenter une taille moyenne inférieure à 1 µm, préférentiellement une taille moyenne comprise entre 0,2 et 0,4 µm.

Il est possible de doper le réseau cristallin du dioxyde du titane en y incorporant au moins un ion métallique, tel que par exemple l'antimoine.

Les particules de dioxyde de titane peuvent éventuellement subir au préalable un traitement organique, notamment pour aider leur dispersibilité, par exemple à partir de polyols, de polyglycols, de polyethers, d'esters organiques (tel que le dioctylazelate), et/ou de triméthylolpropane.

D'une manière préférentielle, le dioxyde de titane utilisé selon l'invention, lorsqu'il se présente sous la forme de particules, ne comprend pas d'enrobage inorganique. Il est connu que les particules de dioxyde de titane utilisées dans les polyamides pour applications fils, fibres ou filaments sont généralement enrobées par des composés minéraux, tels que la silice et/ou de l'alumine, à des taux élémentaires (silicium et/ou aluminium) compris entre 0,3 et 0,75 % en poids, par rapport au poids total de la particule. On préférera utiliser des particules de dioxyde de titane comprenant moins de 0,2 % en poids, préférentiellement moins de 0,1 % en poids de silicium et/ou d'aluminium (élément).

La présence de titane dans la composition peut être déterminée par analyse élémentaire, tel que par exemple par fluorescence X. La présence de dioxyde de titane dans la composition peut être déterminée par diffraction X de manière à mettre en évidence l'aspect cristallin du dioxyde de titane. La présence de particules de dioxyde de titane non enrobées par un ou plusieurs composés minéraux dans la composition selon l'invention peut être mise en évidence de la manière suivante : analyse élémentaire, tel que par exemple par ICP (Inductive Coupled Plasma) sur un produit minéralisé pour déterminer la présence d'éléments titane, silicium et/ou aluminium. On peut corréler la proportion de titane à celle de silicium et/ou aluminium afin de déterminer la présence ou l'absence dans la composition de particules de dioxyde de titane enrobées ou non.

La composition selon l'invention comprendr-s un composé du manganèse. Ce composé du manganèse peut être un sel de manganèse, par exemple obtenu à partir d'acide minéral et/ou organique.

Les sels de manganèse sont préférentiellement choisis dans le groupe comprenant : l'oxalate de manganèse, le lactate de manganèse, le benzoate de manganèse, le stéarate de manganèse, l'acétate de manganèse, l'hypophosphite de manganèse, le silicate de manganèse, le pyrophosphate de manganèse, et le chlorure de manganèse, préférentiellement l'acétate de manganèse. On utilise préférentiellement l'acétate de manganèse tétrahydrate (CAS : 6156-78-1).

La composition selon l'invention peut comprendre de 5 à 100 ppm (mg par kilo de polyamide) de composé du manganèse, ladite concentration étant exprimée en élément manganèse, préférentiellement de 5 à 50 ppm. On peut mesurer la proportion d'élément manganèse dans la composition par analyse élémentaire, tel que par exemple analyse par fluorescence X ou ICP (Inductive Coupled Plasma).

La matrice polyamide de l'invention peut être à base d'un polyamide du type de ceux obtenus par polymérisation à partir d'un lactame et/ou d'un aminoacide, ou à base d'un polyamide du type de ceux obtenus par polycondensation d'un diacide carboxylique et d'une diamine. La matrice polyamide peut comprendre un (co)polyamide choisi dans le groupe comprenant : le polyamide 6, le polyamide 66, le polyamide 11, le polyamide 12, le copolyamide 4-6, le copolyamide 6-66, le copolyamide 6-10, le copolyamide 6-12, le copolyamide 12-12 et/ou leurs mélanges et copolyamides. La composition polyamide peut être à base, ou comprendre, des polyamide étoiles ou branchés, tels que ceux mentionnés dans les demandes WO9724388 ou EP1086161.

Le (co)polyamide peut présenter une teneur en groupements terminaux amine (GTA) compris entre 35 et 75 meq/kg, préférentiellement entre 35 et 50 meq/kg.

La composition stabilisée à base de polyamide peut comporter d'autres additifs, en supplément des additifs déjà mentionnés. Ces additifs peuvent être introduits avant, pendant ou après la polymérisation ou par mélange en phase fondue. A titre d'exemple de tels additifs, on peut citer les pigments ou matifiants destinés à conférer aux compositions un aspect mat et/ou coloré, les ignifugeants, les autres stabilisants, tels que des anti-oxydants, tels que des antioxydants phénoliques, des anti-UV, des absorbeurs d'UV, et des stabilisants phosphorés, les agents antimicrobiens, les agents anti-moussages, et les agents auxiliaires de traitements.

Différentes méthodes peuvent être utilisées pour fabriquer la composition selon l'invention. On peut notamment utiliser un procédé de fabrication d'une composition polyamide stabilisée dans lequel on introduit au moins un stabilisant vis à vis de la lumière et/ou de la chaleur comprenant au moins une fonction amine encombrée, du dioxyde de titane et un composé du manganèse, aux monomères de base du polyamide, avant ou pendant la phase de polymérisation.

On peut notamment introduire en polymérisation un stabilisant vis à vis de la lumière et/ou de la chaleur comprenant au moins une fonction amine encombrée, tel que le composé de formule (VI), et du dioxyde de titane. On peut aussi introduire en polymérisation un stabilisant vis à vis de la lumière et/ou de la chaleur comprenant au moins une fonction amine encombrée, tel que le composé de formule (VI), et un composé du manganèse, tel que l'acétate de manganèse. La présente invention concerne également une composition polyamide susceptible d'être obtenue par le procédé décrit précédemment.

Le procédé de fabrication du polyamide selon l'invention peut être choisi parmi tous les procédés connus, à condition que les différents composés mentionnés précédemment, soient introduits dans le milieu de polymérisation, avant ou pendant la phase de polymérisation. Il est possible qu'un produit présentant un faible degré de polycondensation soit formé avant l'introduction des additifs. Les différents composés mentionnés précédemment peuvent être introduits dans le milieu de polymérisation soit successivement, à différents stades du procédé avant la phase de polymérisation, soit en même temps.

Les particules de dioxyde de titane peuvent être introduites sous forme d'une suspension aqueuse ou en mélange avec du caprolactame et de l'eau.

Un procédé de fabrication avantageux utilise comme matière première un sel d'adipate d'hexaméthylène diammonium, de préférence sous forme d'une solution à des concentrations en sel comprises entre 50 et 70 % en poids, pour former un polyamide 66. Ce procédé, continu ou discontinu, peut comporter une première phase d'évaporation de l'eau, et une deuxième phase de polymérisation par polycondensation.

On peut également utiliser comme matière première de l'ε-polycaprolactame, pour former un polyamide 6. Ce procédé, continu ou discontinu, peut comporter une première phase d'ouverture de cycle, une phase de polyaddition et de polycondensation, une phase de granulation et enfin une phase de lavage des granulés.

On peut ajouter avant ou pendant la polymérisation du polyamide, différents composés extenseurs ou limiteurs de chaîne aux monomères de base du polyamide, tels que des mono-acides, des diacides, des mono-amines et/ou des diamines. Par exemple, on peut ajouter de l'acide acétique, de l'acide benzoïque, de l'acide propionique, de l'acide isophtalique, de l'acide téréphtalique, de l'acide adipique, et/ou de l'hexaméthylènediamine.

La présente invention concerne également des articles, éventuellement textiles, tels que des fils, fibres et/ou filaments obtenus par mise en forme de la composition selon l'invention.

Les compositions de l'invention peuvent être mises en forme de fils, fibres et/ou filaments, directement après la polymérisation, sans étapes intermédiaires de solidification et de refusion. Elles peuvent aussi êtres mises en forme de granulés, destinés à subir une refusion pour mise en forme définitive ultérieure, par exemple pour la fabrication d'articles moulés ou pour la fabrication de fils, fibres ou filaments.

Les fils, fibres et/ou filaments mis en forme à partir de compositions selon l'invention sont réalisés par filage en fondu : la composition est extrudée à l'état fondu à travers des filières comprenant un ou plusieurs orifices.

Tous les procédés de filage en fondu peuvent être utilisés.

Pour la fabrication de fils multifilamentaires, on cite les procédés de filage ou filage-étirage ou filage-étirage-texturation intégrés ou non, quelle que soit la vitesse de filage. On peut produire les fils par filage haute vitesse, à vitesse de filage supérieure à 3500 m/min. De tels procédés sont souvent désignés par les termes suivants: POY (partialy oriented yarn), FOY (fully oriented yarn), FEI (filage-étirage-intégré).

Pour la fabrication de fibres, les filaments peuvent par exemple être réunis sous forme de mèche ou de nappe, directement après le filage ou en reprise, étirés, texturés et coupés. Les fibres obtenues peuvent être utilisées pour la fabrication de non tissés ou de filés de fibres.

Les fils, fibres et/ou filaments de l'invention peuvent subir divers traitements, tels que par exemple l'étirage en une étape continue ou en reprise, le dépôt d'ensimage, l'huilage, l'entrelacement, la texturation, le frisage, le traitement thermique de fixation ou de relaxation, le moulinage, le retordage, et/ou la teinture.

La présente invention concerne également des articles textiles comprenant au moins des fils, fibres et/ou filaments tels que décrits précédemment. On entend notamment par article textile, tout type d'étoffes tels que des surfaces textiles, tissées, non-tissées, tricotées, tuftées, en feutre, aiguilletés, cousus, flocké ou réalisé par un autre mode de fabrication.

Les fils, fibres et/ou filaments, et les articles obtenus à partir des fils, fibres et/ou filaments peuvent être teints. On cite en particulier les procédés de teinture en bain ou par jets. Les teintures préférées sont les teintures acide, métallifères ou non métallifères.

### Exemple 1 : Composition polyamide 66 selon l'invention

On fabrique un copolymère à base de polyamide 66 à partir de 1115kg d'une solution aqueuse d'un sel d'hexaméthylène diammonium concentré à 52% en poids et à laquelle sont ajoutés :
- 58 g d'acétate de manganèse tétrahydraté (Référence Aldrich : 22, 100-7) ;
- 20 g d'antimousse Rhodorsil 411^{®}:
- 12,9 kg de caprolactame ;
- 780 g de Nylostab SEED^{®} de Clariant ;
- 257 g d'acide adipique ; et
- 8,8 kg de TiO₂ non enrobé (Hombitan LWS^{®} de Sachtleben) Le polyamide est fabriqué selon le procédé standard comprenant une étape de concentration de la solution dans l'évaporateur, une étape de polycondensation dans un réacteur autoclave agité, avec une phase d'environ 100 min de distillation sous un palier en pression de 18,5 bars pour laquelle la température finale est de 267°C, une phase de décompression d'environ 25 min de 18,5 bars à 1 bar à température finale de 269°C et une phase de finition d'environ 26 min pour laquelle la température finale est de 278°C.

Au cours de la phase de distillation sous pression après 25 min on ajoute 44,2 kg d'une dispersion aqueuse à 20 % poids de particules d'oxyde de titane non enrobé.

On obtient un copolymère à base de polyamide 66 comprenant 2,5 % en poids de motifs du polyamide 6 et 1,7% en poids de dioxyde de titane.

### Exemple 2 comparatif : Composition polyamide 66

Un polyamide témoin 2C est obtenu suivant le même procédé à partir des matières de base suivantes : On fabrique un copolymère à base de polyamide 66 à partir de 1115kg d'une solution aqueuse d'un sel d'hexaméthylène diammonium concentré à 52 % en poids et à laquelle sont ajoutés :
- 58 g d'acétate de manganèse tétrahydraté (Référence Aldrich : 22, 100-7) ;
- 20 g d'antimousse Rhodorsil 411^{®};
- 13 kg de caprolactame ;
- 120 g d'acide acétique ; et
- 8,8 kg de TiO₂ non enrobé (Hombitan LWS^{®} de Sachtleben).

On obtient un copolymère à base de polyamide 66 comprenant 2,5 % en poids de motifs du polyamide 6 et 1,7% en poids de dioxyde de titane.

### Exemple 3 comparatif : Composition polyamide 66

Un polyamide témoin 3C est obtenu suivant le même procédé à partir des matières de base suivantes : On fabrique un copolymère à base de polyamide 66 à partir de 1115kg d'une solution aqueuse d'un sel d'hexaméthylène diammonium concentré à 52 % en poids et à laquelle sont ajoutés :
- 20 g d'antimousse Rhodorsil 411^{®};
- 13 kg de caprolactame ;
- 120 g d'acide acétique ; et
- 8,8 kg de TiO₂ enrobé par de la silice et de l'alumine (Hombitan LOCR-SM^{®} de Sachtleben).

On obtient un copolymère à base de polyamide 66 comprenant 2,5 % en poids de motifs du polyamide 6 et 1,7% en poids de dioxyde de titane.

### Exemple 4 comparatif: Composition polyamide 66

Un polyamide témoin 4C est obtenu suivant le même procédé à partir des matières de base suivantes : On fabrique un copolymère à base de polyamide 66 à partir de 1115kg d'une solution aqueuse d'un sel d'hexaméthylène diammonium concentré à 52 % en poids et à laquelle sont ajoutés :
- 20 g d'antimousse Rhodorsil 411^{®};
- 12,9 kg de caprolactame ;
- 780 g de Nylostab SEED^{®} de Clariant ;
- 257 g d'acide adipique ; et
- 8,8 kg de TiO₂ enrobé par de la silice et de l'alumine (Hombitan LOCR-SM^{®} de Sachtleben).

On obtient un copolymère à base de polyamide 66 comprenant 2,5 % en poids de motifs du polyamide 6 et 1.7% en poids de dioxyde de titane.

### Exemple 5 : Filage et tricotage des compositions polyamide

Les compositions polyamides obtenus dans les exemples précédents sont filées avec une vitesse de renvidage de 4200 m/min., puis étiré avec une vitesse de renvidage de 1070 m/min. Le titre des fils obtenus est de 101 dtex pour 68 filaments avant étirage et 82 dtex après étirage.

Pour la polyamide 1 : La ténacité du fil POY avant étirage est de 34,8 cN/tex et l'élongation à la rupture est de 75,9 %. La ténacité du fil étiré est de 43,9 cN/tex et l'élongation à la rupture est de 43,3 %.

Pour le polyamide témoin 2C : La ténacité du fil POY avant étirage est de 34,5 cN/tex et l'élongation à la rupture est de 74,2 %. La ténacité du fil étiré est de 43,3 cN/tex et l'élongation à la rupture est de 43,9 %.

Pour le polyamide témoin 3C : La ténacité du fil POY avant étirage est de 33,9 cN/tex et l'élongation à la rupture est de 77 %. La ténacité du fil étiré est de 42,1 cN/tex et l'élongation à la rupture est de 44,2 %.

Pour le polyamide témoin 4C : La ténacité du fil POY avant étirage est de 34,2 cN/tex et l'élongation à la rupture est de 76,3 %. La ténacité du fil étiré est de 42,4 cN/tex et l'élongation à la rupture est de 44,6 %.

On réalise 5 surfaces tricotée à partir des 5 fils décrits précédemment. Chaque surface tricotée comprend un type de fil.

### Exemple 6: Thermofixation

Les surfaces textiles obtenues dans l'exemple 5 sont ensuite thermofixées à 195°C pendant 45 secondes.

On mesure suivant les méthodes analytiques décrites l'indice de viscosité et le taux de groupements amine avant et après thermofixation.

**Tableau I**

| **Exemples** | **IV du fil (ml/g)** | **GTA meq/kg** | **Delta IV (ml/g)** | **Delta GTA Meq/kg** |
|---|---|---|---|---|
| 1 | 129,3 | 44,9 | - 0,2 | - 1 |
| 2C | 129,4 | 41,4 | - 3,1 | - 8 |
| 3C | 128,4 | 41,7 | - 14 | - 9 |
| 4C | 126,4 | 45,7 | - 3 | - 7 |

Méthode de détermination :
- IV du fil (ml/g) : On dissout le fil POY dans l'acide formique 90% à la concentration de 0,5 % poids/volume. La mesure de viscosité est faite à 25°C avec un tube Ubbelohde de 0,63 mm de diamètre selon la norme ISO 307.
- GTA : Les groupements amines sont déterminés par titration potentiométrique de 2 g de fil POY solubilisé dans 70 ml de phénol (90%) à 40°C pendant 5 heures, avec de l'acide chlorhydrique 0,1 N.
- Delta IV après thermofixation : On fait la différence entre l'IV du tricot après thermofixation moins l'IV du tricot avant thermofixation (ie. IV du fil POY).
- Delta GTA (meq/kg) : On fait la différence entre le taux de GTA du tricot après thermofixation moins le taux de GTA du tricot avant thermofixation (ie. IV du fil POY).

### Exemple 7 : Composition polyamide 66 selon l'invention et essais de thermofixation

On fabrique un copolymère à base de polyamide 66 à partir de 3148 g d'une solution aqueuse d'un sel d'hexaméthylène diammonium concentré à 52% en poids et à laquelle sont ajoutés :
- 1,45 g d'acétate de manganèse tétrahydraté (Référence Aldrich : 22, 100-7):
- 78,7 g de caprolactame ;
- 0,61 g d'acide acétique ;
- 0,1 g d'antimousse Rhodorsil 411^{®};
- 14 g de Nylostab SEED^{®} de Clariant ; et
- 200 g d'une suspension aqueuse à 20 % de différents TiO₂ (voir Tableau II). Le polyamide est fabriqué selon le procédé standard décrit précédemment dans un réacteur de 7,5 litres, avec un temps de finition de 40 minutes environ.

Le polyamide est cryobroyé (100-200 µm) puis on procède à un test de thermofixation à 200°C pendant 5 minutes sur la poudre. On mesure ensuite avec les méthodes analytiques décrites précédemment la variation de l'indice de viscosité avant et après thermofixation.

**Tableau II**

| **Exemples** | **Type de TiO₂** | **Delta IV (ml/g)** |
|---|---|---|
| 7.1 | LWS | 4,28 |
| 7.2 | LWS-U | 4,8 |
| 7.3 | LWSU-HD | 4,8 |
| 7.4 | APP2 | - 7 |

Les particules de TiO₂ utilisés présentent les caractéristiques suivantes :
- Hombitan LWS^{®} (Sachtleben) : pas d'enrobage inorganique / pas d'enrobage organique / pas de dopage du cristal
- Hombitan LWS-U^{®} (Sachtleben) : pas d'enrobage inorganique / pas d'enrobage organique / dopage à l'antimoine du cristal
- Hombitan LWSU-HD^{®} (Sachtleben) : pas d'enrobage inorganique / enrobage organique / dopage à l'antimoine du cristal
- APP2^{®} (Huntsman) : enrobage inorganique / enrobage organique / pas dopage du cristal

### Exemale 8 : Stabilité lumière

Les fil étirés des exemples 1 et C2 sont tricotés. Les surfaces obtenues sont soumises telles quelles sans désensimage et sans teinture à un Xenotest (enceinte Xenotest 1508 Hanau / température du panneau noir de 45°C / humidité relative de 60 %).

**Tableau III**

| **Exemples** | **Contrainte à la rupture (cN/tex)*** | | | |
|---|---|---|---|---|
| | **T=0** | **T=1 semaine** | **T=2 semaines** | **T=4 semaines** |
| 2C | 52 | 46 | 38 | 30 |
| 1 | 53 | 52 | 49 | 40 |

| | | | | |
|---|---|---|---|---|
| * *: moyenne sur 6 essais* | | | | |

## Revendications

1. Composition à base de matrice polyamide comprenant au moins un stabilisant vis à vis de la lumière et/ou de la chaleur comprenant au moins une fonction amine encombrée,
du dioxyde de titane et
un composé du manganèse.

2. Composition selon la revendication 1, **caractérisée en ce que** le stabilisant comprenant au moins une fonction amine encombrée est choisi dans le groupe comprenant : la 4-amino-2,2,6,6-tétramethylpipéridine, la 4-carboxy-2,2,6,6-tétramethylpipéridine, les composés aromatiques de formule (I) : 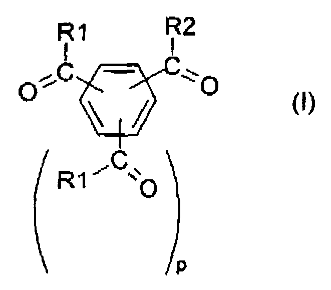 dans laquelle p est égal à 0 ou 1, et R1 et R2 sont des groupements hydrocarbonés identiques ou différents, dont l'un au moins comprend une fonction amine encombrée.

3. Composition selon l'une quelconque des revendications 1 à 2, **caractérisée en ce que** le stabilisant à la lumière comprenant au moins une fonction amine encombrée est le composé de formule (VI) :

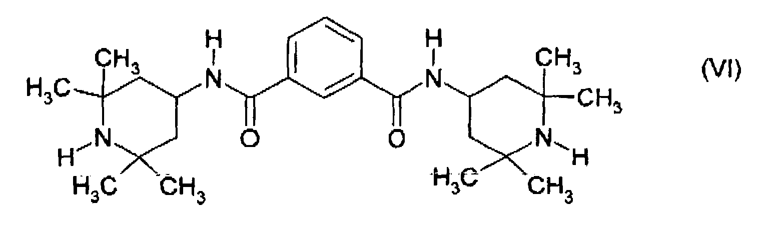

4. Composition selon l'une quelconque des revendications 1 à 3, **caractérisée en ce que** ladite composition comprend de 0,05 % à 0,5 % en poids de stabilisant vis à vis de la lumière et/ou de la chaleur comprenant au moins une fonction amine encombrée, par rapport au poids total de la composition.

5. Composition selon l'une quelconque des revendications 1 à 4, **caractérisée en ce que** le dioxyde de titane est une particule de dioxyde de titane sous forme cristalline.

6. Composition selon l'une quelconque des revendications 1 à 5, **caractérisée en ce que** le dioxyde de titane est une particule de dioxyde de titane ne comprenant pas d'enrobage inorganique.

7. Composition selon l'une quelconque des revendications 1 à 6, **caractérisée en ce que** ladite composition comprend de 0,01 % à 3 % en poids de dioxyde de titane par rapport au poids total de la composition.

8. Composition selon l'une quelconque des revendications 1 à 6, **caractérisée en ce que** le composé du manganèse est un sel de manganèse obtenu à partir d'un acide minéral et/ou organique.

9. Composition selon la revendication 8, **caractérisée en ce que** le sel de manganèse est choisi dans le groupe comprenant : l'oxalate de manganèse, le lactate de manganèse, le benzoate de manganèse, le stéarate de manganèse, l'acétate de manganèse, l'hypophosphite de manganèse, le silicate de manganèse, le pyrophosphate de manganèse, et le chlorure de manganèse.

10. Composition selon l'une quelconque des revendications 1 à 9, **caractérisée en ce que** ladite composition comprend de 5 à 100 ppm de composé du manganèse, ladite concentration étant exprimée en élément manganèse.

11. Composition selon l'une quelconque des revendications 1 à 10, **caractérisée en ce que** la matrice polyamide comprend un (co)polyamide choisi dans le groupe
comprenant : le polyamide 6, le polyamide 66, le polyamide 11, le polyamide 12, le copolyamide 4-6, le copolyamide 6-66, le copolyamide 6-10, le copolyamide 6-12, le copolyamide 12-12 et/ou leurs mélanges et copolyamides.

12. Procédé de fabrication d'une composition polyamide stabilisée **caractérisé en ce que** l'on introduit au moins un stabilisant vis à vis de la lumière et/ou de la chaleur comprenant au moins une fonction amine encombrée (z+),
du dioxyde de titane et
un composé du manganèse
aux monomères de base du polyamide, avant ou pendant la phase de polymérisation.

13. Composition polyamide susceptible d'être obtenu par le procédé de la revendication 12.

14. Fils, fibres et/ou filaments obtenus par mise en forme de la composition selon l'une quelconque des revendications 1 à 11 ou de la composition obtenue par le procédé de la revendication 12.

15. Article textile comprenant au moins des fils, fibres et/ou filaments selon la revendication 14.

## Claims

1. Composition based on a polyamide matrix comprising at least one light and/or heat stabilizer comprising at least one hindered amine functional group, titanium dioxide and a manganese compound.

2. Composition according to Claim 1, **characterized in that** the stabilizer comprising at least one hindered amine functional group is chosen from the group consisting of: 4-amino-2,2,6,6-tetramethylpiperidine, 4-carboxy-2,2,6,6-tetramethylpiperidine and aromatic compounds of formula (I): 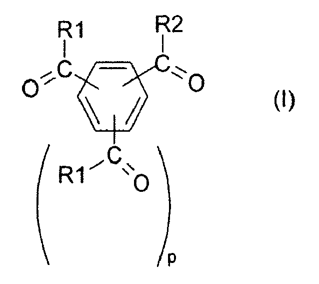 in which p is equal to 0 or 1 and R1 and R2 are identical or different hydrocarbon groups, at least one of which comprises a hindered amine functional group.

3. Composition according to either one of Claims 1 and 2, **characterized in that** the light stabilizer comprising at least one hindered amine functional group is the compound of formula (VI):

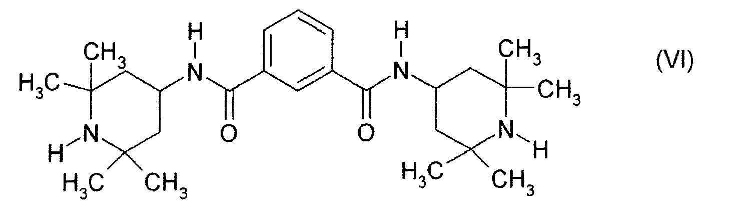

4. Composition according to any one of Claims 1 to 3, **characterized in that** the said composition comprises from 0.05% to 0.5% by weight of light and/or heat stabilizer comprising at least one hindered amine functional group, with respect to the total weight of the composition.

5. Composition according to any one of Claims 1 to 4, **characterized in that** the titanium dioxide is a titanium dioxide particle in the crystalline form.

6. Composition according to any one of Claims I to 5, **characterized in that** the titanium dioxide is a titanium dioxide particle riot comprising an inorganic coating.

7. Composition according to any one of Claims 1 to 6, **characterized in that** the said composition comprises from 0.01% to 3% by weight of titanium dioxide, with respect to the total weight of the composition.

8. Composition according to any one of Claims 1 to 6, **characterized in that** the manganese compound is a manganese salt obtained from an inorganic and/or organic acid.

9. Composition according to Claim 8, **characterized in that** the manganese salt is chosen from the group consisting of: manganese oxalate, manganese lactate, manganese benzoate, manganese stearate, manganese acetate, manganese hypophosphite, manganese silicate, manganese pyrophosphate and manganese chloride.

10. Composition according to any one of Claims 1 to 9, **characterized in that** the said composition comprises from 5 to 100 ppm of manganese compound, the said concentration being expressed as manganese element.

11. Composition according to any one of Claims 1 to 10, **characterized in that** the polyamide matrix comprises a (co)polyamide chosen from the group consisting of:
polyamide 6, polyamide 66, polyamide 11, polyamide 12, copolyamide 4-6, copolyamide 6-66, copolyamide 6-10, copolyamide 6-12, copolyamide 12-12 and their blends and copolyamides.

12. Process for the manufacture of a stabilized polyamide composition, **characterized in that** at least one light and/or heat stabilizer comprising at least one hindered amine functional group, titanium dioxide and a manganese compound;
are introduced in the base monomers of the polyamide, before or during the polymerization step.

13. Polyamide composition capable of being obtained by the process of Claim 12.

14. Yarns, fibres and/or filaments obtained by forming the composition according to any one of Claims 1 to 11 or the composition obtained by the process of Claim 12.

15. Textile article comprising at least yarns, fibres and/or filaments according to Claim 14.

## Patentansprüche

1. Zusammensetzung, basierend auf einer Polyamidmatrix, umfassend mindestens einen Stabilisator gegenüber Licht und/oder Hitze, der mindestens eine gehinderte Aminfunktion,
Titandioxid und
eine Manganverbindung umfasst.

2. Zusammensetzung nach Anspruch 1, **dadurch gekennzeichnet, dass** der mindestens eine gehinderte Aminfunktion umfassende Stabilisator aus der folgenden Gruppe ausgewählt ist, umfassend:
4-Amino-2,2,6,6-tetramethylpiperidin, 4-Carboxy-2,2,6,6-tetramethylpiperidin, die aromatischen Verbindungen der Formel (I): 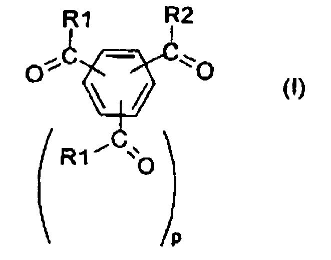 in der p gleich 0 oder 1 ist, und R1 und R2 identische oder verschiedene Kohlenwasserstoffgruppen sind, von denen mindestens eine eine gehinderte Aminfunktion umfasst.

3. Zusammensetzung nach einem der Ansprüche 1 bis 2, **dadurch gekennzeichnet, dass** der mindestens eine gehinderte Aminfunktion umfassende Stabilisator gegen Licht die Verbindung der Formel (VI) ist:

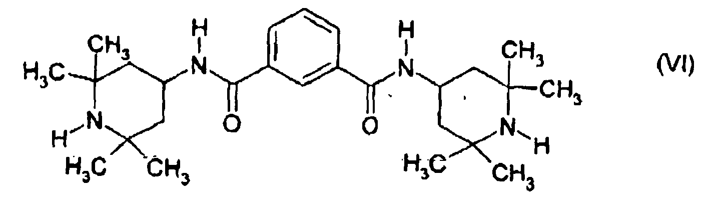

4. Zusammensetzung nach einem der Ansprüche 1 bis 3, **dadurch gekennzeichnet, dass** diese Zusammensetzung, bezogen auf das Gesamtgewicht der Zusammensetzung, 0,05-0,5 Gew.-% des mindestens eine gehinderte Aminfunktion umfassenden Stabilisators gegenüber Licht und/oder Hitze umfasst.

5. Zusammensetzung nach einem der Ansprüche 1 bis 4, **dadurch gekennzeichnet, dass** das Titandioxid ein Titandioxidpartikel in kristalliner Form ist.

6. Zusammensetzung nach einem der Ansprüche 1 bis 5, **dadurch gekennzeichnet, dass** das Titandioxid ein Titandioxidpartikel ist, das keine anorganische Hülle umfasst.

7. Zusammensetzung nach einem der Ansprüche 1 bis 6, **dadurch gekennzeichnet, dass** diese Zusammensetzung, bezogen auf das Gesamtgewicht der Zusammensetzung, 0,01-3 Gew.-% Titandioxid umfasst.

8. Zusammensetzung nach einem der Ansprüche 1 bis 6, **dadurch gekennzeichnet, dass** die Manganverbindung ein Mangansalz ist, das ausgehend von einer anorganischen und/oder organischen Säure erhalten wurde.

9. Zusammensetzung nach Anspruch 8, **dadurch gekennzeichnet, dass** das Mangansalz aus der folgende Gruppe ausgewählt ist, umfassend: Manganoxalat, Manganlactat, Manganbenzoat, Manganstearat, Manganacetat, Manganhypophosphit, Mangansilikat, Mangandiphosphat und Manganchlorid.

10. Zusammensetzung nach einem der Ansprüche 1 bis 9, **dadurch gekennzeichnet, dass** diese Zusammensetzung 5 bis 100 ppm der Manganverbindung umfasst, wobei diese Konzentration in elementarem Mangan ausgedrückt ist.

11. Zusammensetzung nach einem der Ansprüche 1 bis 10, **dadurch gekennzeichnet, dass** die Polyamidmatrix ein (Co)polyamid umfasst, das aus der folgende Gruppe ausgewählt ist, umfassend: Polyamid 6, Polyamid 66, Polyamid 11, Polyamid 12, Copolyamid 4-6, Copolyamid 6-66, Copolyamid 6-10, Copolyamid 6-12, Copolyamid 12-12 und/oder ihre Mischungen und Copolyamide.

12. Verfahren zur Herstellung einer stabilisierten Polyamidzusammensetzung, **dadurch gekennzeichnet, dass** mindestens ein Stabilisator gegenüber Licht und/oder Hitze, der mindestens eine gehinderte Aminfunktion, Titandioxid und
eine Manganverbindung umfasst,
entweder vor oder während der Polymerisationsphase zu den Monomeren auf Polyamidbasis gegeben wird.

13. Polyamidzusammensetzung, die mittels des Verfahrens nach Anspruch 12 erhalten werden kann.

14. Garne, Fasern und/oder Filamente, die durch Formen der Zusammensetzung nach einem der Ansprüche 1 bis 11 oder der durch das Verfahren nach Anspruch 12 erhaltenen Zusammensetzung erhalten werden.

15. Textiler Gegenstand, der zumindest Garne, Fasern und/oder Filamente nach Anspruch 14 umfasst.
